Europäisches Patentamt

European Patent Office

Office européen des brevets

(11) Veröffentlichungsnummer : **0 114 026
B1**

(12) **EUROPÄISCHE PATENTSCHRIFT**

(45) Veröffentlichungstag der Patentschrift :
15.04.87

(21) Anmeldenummer : **83810497.4**

(22) Anmeldetag : **31.10.83**

(51) Int. Cl.⁴ : **G 01 F 23/30**, G 01 F 23/02,
B 65 D 25/56, A 47 K 5/12

(54) **Austauschbarer Behälter für eine Seifenlösung.**

(30) Priorität : **10.11.82 CH 6539/82**

(43) Veröffentlichungstag der Anmeldung :
**25.07.84 Patentblatt 84/30**

(45) Bekanntmachung des Hinweises auf die Patenterteilung : **15.04.87 Patentblatt 87/16**

(84) Benannte Vertragsstaaten :
**AT BE CH DE FR GB IT LI LU NL SE**

(56) Entgegenhaltungen :
FR-A- 722 970
FR-A- 1 254 335
FR-A- 2 184 086
FR-A- 2 190 094
FR-A- 2 284 534
FR-A- 2 345 118
US-A- 2 225 624

(73) Patentinhaber : **CWS AG
Oberneuhofstrasse 5
CH-6340 Baar (CH)**

(72) Erfinder : **Reidel, Hermann
Malkotscherstrasse 1
D-8752 Mainaschaff (DE)**

(74) Vertreter : **Frauenknecht, Alois J. et al
c/o PPS Polyvalent Patent Service AG Mellingerstrasse 1
CH-5400 Baden (CH)**

## Beschreibung

Die vorliegende Erfindung bezieht sich auf einen austauschbaren Behälter für eine Seifenlösung, mit einem Innenverschluss und einer nach unten sich erstreckenden und mit dem Innenverschluss verschliessbaren Öffnung.

Behälter der obengenannten Art sind an sich bekannt und werden für Seifenlösungs-Dosiervorrichtungen verwendet. In der FR-A-2 184-086 ist ein austauschbarer Behälter für eine Seifenlösung mit einer Seifenlösungs-Dosiervorrichtung beschrieben und dargestellt. Die Seifenlösung befindet sich in einem flaschenartigen Behälter, dessen innerer Verschluss beim Einsetzen des Behälters in die Dosiervorrichtung abgehoben wird. Der Verschluss weist sternartig ausgebildete, mit Rippen begrenzte, seitliche Ausnehmungen auf, die sich jedoch nur über einen Teil der Länge des Verschlusses erstrecken, so dass der übrige Teil des Verschlusses im verschlossenen Zustand ausreichend dichtet. Nach dem Abheben des Verschlusses, der jedoch weiter in der Ausflussöffnung mit Hilfe der Rippen haftet, fliesst die Seifenlösung in eine Kammer, aus der sie von Hand über eine Dosierpumpe nach aussen in kleinen Mengen gepumpt wird. Der Behälter mit der Dosiervorrichtung ist mit einer Abdeckung versehen, die sowohl eine ästhetische als auch eine Schutz-Funktion aufweist, wobei die letztere insbesondere in öffentlichen Waschräumen zweckmässig ist. Um rechtzeitig feststellen zu können, dass in der Dosiervorrichtung schon nur wenig Seifenlösung vorhanden ist, und dass somit der leere Behälter für einen vollen Behälter ausgewechselt sein soll, ist in der Abdeckung in der Höhe der Kammer zwischen der Ausflussöffnung aus dem Behälter und zwischen der Dosierpumpe ein Fenster ausgebildet. Durch dieses kann man die Kammer von aussen betrachten und somit den Füllstand kontrollieren. Die Kammer für die Füllstandsanzeige kann jedoch mit der Seifenlösung verklebt werden, so dass sie entweder gereinigt werden muss, wozu eine Demontage der Vorrichtung nötig wäre oder man müsste auf die rechtzeitige Füllstandsanzeige verzichten.

Die Aufgabe der vorliegenden Erfindung besteht darin, die Nachteile des Bekannten zu beseitigen und einen austauschbaren Behälter der eingangs genannten Art zu schaffen, der eine klare Füllstandanzeige sichert und der mit einfachen Mitteln erlaubt, mit dem Austauschen des Behälters auch die Füllstandanzeige auszutauschen.

Die vorgenannte Aufgabe wird erfindungsgemäss dadurch gelöst, dass der Innenverschluss als ein Anzeigeschwimmkörper ausgebildet ist, der in bezug auf die Farbe der Seifenlösung kontrastreich gefärbt ist, dass wenigstens der untere Teil des austauschbaren Behälters aus einem durchsichtigen Material besteht und dass der austauschbare Behälter mit einem Hals versehen ist, dessen eine Wandung sich in der Richtung einer vertikalen Zone der Wandung des austauschbaren Behälters erstreckt.

Der Vorteil der Erfindung besteht darin, dass der Innenverschluss beim Einsetzen bzw. Einschrauben des austauschbaren Behälters in das Innere des Behälters eingedrückt wird, wonach er aufwärts schwimmt, weil er entweder aus einem Material besteht, dessen spezifisches Gewicht kleiner ist als dasjenige der Seifenlösung, oder in ihm Luft oder ein anderes Gas eingeschlossen ist. Wenn dann die Menge der Seifenlösung in dem Behälter sinkt, sinkt auch der Innenverschluss und gelangt in den unteren Teil des Behälters, wo er durch eine fensterartige Öffnung in der Seifenlösungs-Dosiervorrichtung sichtbar wird. Diese Lösung sichert, dass der als Anzeigeschwimmkörper ausgebildete Innenverschluss ganz in die Nähe der fensterartigen Öffnung gelangen kann. Um den Innenverschluss als Anzeigekörper ausreichend erkennbar zu machen, besteht dieser aus einem undurchsichtigen und/oder gefärbten Material. In der Praxis hat sich als die geeignetste Farbe Signalrot erwiesen.

Besonders günstig ist es, wenn eine Wandung des Halses in vertikaler Richtung eine geradlinige Verlängerung einer vertikalen Zone der Wandung des austauschbaren Behälters bildet. Diese Weiterbildung ermöglicht, dass der Innenverschluss glatt mit der sinkenden Höhe der Seifenlösung bis in den tiefsten Teil des Behälters gelangen kann.

Es ist vorteilhaft, wenn sich der Hals des austauschbaren Behälters nach unten verjüngt. Dies ermöglicht ebenfalls ein glattes Herunterrutschen des Innenverschlusses nach unten.

Der Behälter und der Verschluss bestehen zweckmässig aus PVC.

Die Erfindung wird im folgenden anhand schematischer Zeichnungen näher erläutert.

Es zeigt:

Figur 1 eine Seitenansicht auf den erfidungsgemässen austauschbaren Behälter,

Figur 2 eine Vorderansicht auf den Behälter aus Figur 1, wobei der untere Teil im Schnitt gezeigt ist, so dass auch ein Innenverschluss sichtbar ist,

Figur 3 den Schnitt III-III aus Figur 1 und

Figur 4 im vergrösserten Massstab den Innenverschluss, wobei im linken Teil ein Schnitt und im rechten Teil eine Ansicht gezeigt werden.

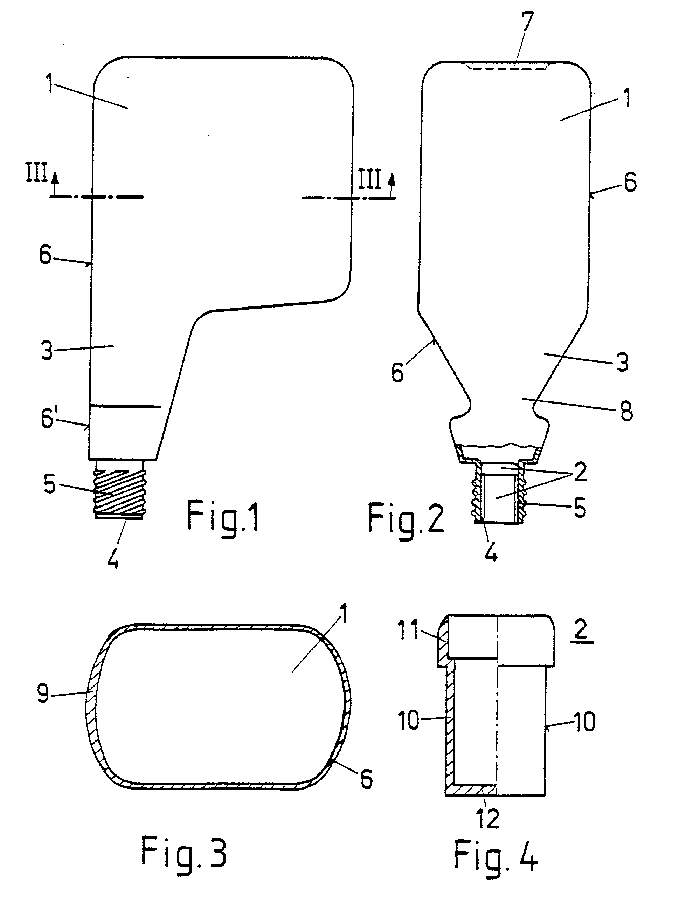

Gemäss Figur 1 ist ein austauschbarer Behälter 1 mit einem Hals 3 versehen, der sich nach unten verjüngt. Der unterste Teil ist mit einem äusseren Gewinde 5 versehen, das zum Einschrauben in die Seifenlösungs-Dosiervorrichtung dient. Innerhalb dieses Teiles mit dem äusseren Gewinde 5 ist die Öffnung 4, in der vor der Benutzung des Behälters ein in dieser Zeichnung nicht sichtbarer Innenverschluss angeordnet ist. Die linke Wandung 6 des austauschbaren Behälters 1 verläuft geradlinig mit der linken Wandung 6' des Halses 3.

Gleiche Teile sind in allen Zeichnungen mit denselben Bezugsziffern versehen.

In Figur 2 sieht man die flache Ausbildung des austauschbaren Behälters 1 und die Verjüngung des Halses 3. In der oberen Wandung des austauschbaren Behälters 1 ist eine Vertiefung 7 vorgesehen. In diese Vertiefung 7 der Wandung 6 kann man nach dem Einsetzen des Behälters eine leichte Perforierung anbringen, um den Eintritt der Umgebungsluft in den Behälter 1 zu ermöglichen. In Figur 2 ist auch eine Einschnürung 8 gezeigt, die einerseits die Festigkeit des Halses 3 erhöht und andererseits das Herunterrutschen des Innenverschlusses 2 bei sinkender Seifenlösungsmenge erleichtert. Der untere Teil der Figur 2 im Schnitt gezeichnet, so dass da auch der Innenverschluss 2 sichtbar ist.

In Figur 3 ist der Schnitt III-III aus der Figur 1 gezeigt. Aus der Figur 3 sieht man, dass der austauschbare Behälter 1 in diesem Beispiel mit flachen, längeren Wandungen ausgebildet ist, wobei die links gezeigte vordere Wandung und die rechts gezeige hintere Wandung 6 abgerundet sind. Die vordere Wandung 9 weist aus Festigkeitsgründen eine grössere Dicke auf als die übrigen Wandungen des austauschbaren Behälters 1.

Die Figur 4 zeigt den Innenverschluss 2 in einem vergrösserten Massstab. Die Wandungen 10 des Innenverschlusses 2 sind abgestuft ausgebildet, so dass im oberen Teil eine ringförmige Erweiterung 11 entstanden ist. Die oberen Kanten dieser ringförmigen Erweiterung 11 sind abgerundet, was das Einpressen dieses Innenverschlusses 2 in die Öffnung 4 des austauschbaren Behälters 1 erleichtert. Der Innenverschluss 2 ist nach oben, also in Richtung Inneres des Behälters 1, offen. Der untere Teil des Innenverschlusses 2 ist mit einem Boden 12 verschlossen. Über diesen Boden 12 wird der Innenverschluss 2 beim Einmontieren des austauschbaren Behälters 1 mit Hilfe eines nicht gezeigten Stiftes, der ein Bestandteil der Seifenlösungs-Dosiervorrichtung ist, in das Innere dieses Behälters 1 eingedrückt.

### Patentansprüche

1. Austauschbarer Behälter (1) für eine Seifenlösung, mit einem Innenverschluss (2) und einer nach unten sich erstreckenden und mit dem Innenverschluss (2) verschliessbaren Öffnung (4), dadurch gekennzeichnet, dass der Innenverschluss (2) als ein Anzeigeschwimmkörper ausgebildet ist, der in bezug auf die Farbe der Seifenlösung kontrastreich gefärbt ist, dass wenigstens der untere Teil des austauschbaren Behälters (1) aus einem durchsichtigen Material besteht und dass der austauschbare Behälter (1) mit einem Hals (3) versehen ist, dessen eine Wandung (6') sich in der Richtung einer vertikalen Zone der Wandung (6) des austauschbaren Behälters (1) erstreckt.

2. Austauschbarer Behälter nach Anspruch 1, dadurch gekennzeichnet, dass die Wandung (6') des Halses (3) in vertikaler Richtung eine geradlinige Verlängerung einer vertikalen Zone der Wandung (6) des austauschbaren Behälters (1) bildet.

3. Austauschbarer Behälter nach Ansprüchen 1 oder 2, dadurch gekennzeichnet, dass sich der Hals (3) des austauschbaren Behälters (1) nach unten verjüngt.

### Claims

1. A replaceable container (1) for a soap solution, the replaceable container having an inner seal (2) and an opening (4) extending downwardly and being sealable by means of the inner seal, characterised in that the inner seal (2) is designed as an indicator float coloured so as to provide a contrast with the colour of the soap solution, that at least the lower portion of the replaceable container (1) comprises a transparent material and that the replaceable container (1) is provided with a neck (3), a wall (6') of the neck (3) extending in the direction of a vertical region of the wall (6) of the replaceable container (1).

2. A replaceable container according to claim 1, characterised in that the wall (6') of the neck (3) forms a rectilinear extension in a vertical direction of a vertical region of the wall (6) of the replaceable container (1).

3. A replaceable container according to claim 1 or 2, characterised in that the neck (3) of the replaceable container (1) is tapered downwardly.

### Revendications

1. Récipient interchangeable (1) pour une solution de savon, comportant une fermeture intérieure (2) et une ouverture (4) s'étendant vers le bas et pouvant être obturée par la fermeture intérieure (2), caractérisé en ce que la fermeture intérieure (2) est réalisée sous forme de flotteur indicateur dont la couleur est contrastée par rapport à la couleur de la solution de savon, au moins la partie inférieure du récipient interchangeable (1) est en matériau transparent et le récipient interchangeable (1) est muni d'un col (3) dont une paroi (6') s'étend en direction d'une zone verticale de la paroi (6) du récipient interchangeable (1).

2. Récipient interchangeable selon la revendication 1, caractérisé en ce que la paroi (6') du col (3) constitue dans le sens vertical un prolongement rectiligne d'une zone verticale de la paroi (6) du récipient interchangeable (1).

3. Récipient interchangeable selon les revendications 1 ou 2, caractérisé en ce que le col (3) du récipient interchangeable (1) se rétrécit vers le bas.

Fig.1

Fig.2

Fig.3

Fig.4